# EUROPÄISCHE PATENTSCHRIFT

(11) **EP 3 297 872 B1**
(45) Veröffentlichungstag und Bekanntmachung des Hinweises auf die Patenterteilung: **09.10.2019**
(21) Anmeldenummer: 16716527.3
(22) Anmeldetag: 08.04.2016
(51) Int. Cl.: B60R 19/48, G10K 9/122, H04R 17/00, G01S 7/521

(54) **FORTBEWEGUNGSMITTEL UND WANDLERANORDNUNG ZUM AUSSENDEN UND/ODER EMPFANGEN VON AKUSTISCHEN SIGNALEN AN EINEM FORTBEWEGUNGSMITTEL**
MEANS OF LOCOMOTION AND TRANSDUCER ARRANGEMENT FOR SENDING AND/OR RECEIVING ACOUSTIC SIGNALS ON A MEANS OF LOCOMOTION
MOYEN DE LOCOMOTION ET DISPOSITIF CONVERTISSEUR POUR ÉMETTRE ET/OU RECEVOIR DES SIGNAUX ACOUSTIQUES AU NIVEAU D'UN MOYEN DE LOCOMOTION

(30) Priorität: 20.05.2015 DE 102015209231
(43) Veröffentlichungstag der Anmeldung: 28.03.2018
(73) Patentinhaber: Robert Bosch GmbH, 70442 Stuttgart (DE)
(72) Erfinder: KARL, Matthias, 76275 Ettlingen (DE)
(86) Internationale Anmeldenummer: PCT/EP2016/057686
(87) Internationale Veröffentlichungsnummer: WO 2016/184603

(56) Entgegenhaltungen:
- DE-A1-102010 025 194
- DE-A1-102012 208 059

## Beschreibung

### Stand der Technik

Der heute übliche Aufbau von Elektro-Akustik-Wandlern zur Ultraschallumfeldvermessung im KFZ ist in der Literatur sehr umfangreich beschrieben. Häufig ist dabei ein piezoelektrischer Elektro-Akustik-Wandler in einem separaten zumeist topfförmigen Gebilde auf dessen Bodenfläche aufgeklebt. Die Bodenfläche bildet zusammen mit dem Elektro-Akustik-Wandler und der Verklebung zwischen Beiden die schallabstrahlende bzw. schallempfangende Membran. Mit viel Aufwand wird heutzutage verhindert, dass durch Seitenwandschwingungen Schall unkontrolliert in seitliche, neben dem Wandler befindliche Bauteile gelangt bzw. umgekehrt, von diesen Bauteilen in den empfangenden Wandler eingekoppelt wird. Dazu wird der Elektro-Akustik-Wandler auf seiner Rückseite mit schalldämmendem Material belegt und man ist bestrebt, in die Seitenwand des Topfes möglichst wenig Schall einzukoppeln. Darüber hinaus werden die Seitenteile des Topfes mit Mitteln wie z.B. Entkopplungsringen gedämpft, um zu verhindern, dass Schall in benachbarte Bauteile einkoppelt bzw. von dort in den Wandler eingekoppelt wird. Solche Topfaufbauten sind nicht besonders flach, sondern meist über 10 mm hoch. Das schränkt ihre Verwendung in unterschiedlichen Umgebungen und Designs stark ein.

Das Dokument DE 10 2010 025 194 A1 beschreibt einen Ultraschallwandler für ein äußeres Kunststoffbauteil eines Kraftfahrzeugs mit einer Ultraschalleinheit. Die Ultraschalleinheit wird durch einen flächig mit einer Membran verbundenen Folienaktuator gebildet. Die Ultraschalleinheit ist in einem Mantel angeordnet und umschließt die Ultraschalleinheit zumindest teilweise.

Das Dokument DE 10 2012 208 059 A1 beschreibt eine Sensoranordnung mit mindestens einer Sensoreinheit, die in einem Trägerelement angeordnet ist und eine schwingfähige Membran verbunden mit einem Piezoaktuator umfasst. Die Membran ist formschlüssig als separate Komponente in das Trägerelement integriert. An einem schwingfähigen Bereich der Membran liegt zudem ein Dämpfungsmaterial an.

Es ist daher eine Aufgabe der vorliegenden Erfindung, eine Wandleranordnung zu entwerfen, mit welcher eine sehr geringe Bauhöhe ermöglicht wird.

### Offenbarung der Erfindung

Die vorstehend identifizierte Aufgabe wird erfindungsgemäß durch eine Wandleranordnung zum Aussenden und/oder Empfangen von akustischen Signalen an einem Fortbewegungsmittel gelöst. Die akustischen Signale können beispielsweise im Ultraschallfrequenzbereich liegen. Das Fortbewegungsmittel kann beispielsweise ein Straßenfahrzeug (PKW, Motorrad, Transporter, LKW, etc.) sein. Die Wandleranordnung umfasst ein Chassis, welches auch als "Grundträger" der Wandleranordnung aufgefasst werden kann. Das Chassis kann Bestandteil einer Außenhaut des Fortbewegungsmittels sein. Eine Membran ist dazu vorgesehen, die mechanischen Schwingungen eines ebenfalls vorgesehenen Elektro-Akustik-Wandlers an das Luftschallfeld anzukoppeln. Der Elektro-Akustik-Wandler kann beispielsweise ein piezoelektrischer Wandler sein. Erfindungsgemäß weist das Chassis eine Kavität auf, welche die Schwingungen der Membran in eine Richtung entgegengesetzt der Schallabstrahlrichtung ermöglicht. Die Membran schließt die Kavität in Schallabstrahlrichtung ab. Die Kavität ist also in Schallabstrahlrichtung durch die Membran "verdeckt". Der Elektro-Akustik-Wandler ist mit der Membran verbunden, so dass an ihm angelegte elektrische Signale die Membran zu Schwingungen anregen. Der Elektro-Akustik-Wandler kann beispielsweise innerhalb eines von der Kavität und der Membran abgeschlossenen Volumens angeordnet sein. Das Chassis kann akustisch dicht ausgeführt sein, wodurch eine Einkopplung von Schall in umliegende Strukturen weitgehend vermieden wird. Dies schließt nicht aus, dass eine Öffnung zur Ermöglichung eines Ausgleichs statischer Fluiddrücke (z.B. als Bohrung im Chassis) vorgesehen ist, um den Arbeitspunkt der Wandleranordnung gegenüber Luftdruckschwankungen zu stabilisieren. Der vorstehend genannte Aufbau ermöglicht eine geringe Bauhöhe der Wandleranordnung in Schallausbreitungsrichtung, wodurch diese in Produkten mit stark begrenztem Bauraum verwendet werden kann.

Die Unteransprüche zeigen bevorzugte Weiterbildungen der Erfindung.

Bevorzugt kann der Elektro-Akustik-Wandler flächig mit der Membran verbunden sein. Beispielsweise kann er eine Klebeverbindung zur Membran aufweisen, wodurch er eingerichtet ist, im Ansprechen auf angelegte elektrische Signale eine Biegung der Membran herbeizuführen, indem die elektrischen Signale eine Dilatation/Kontraktion des Elektro-Akustik-Wandlers bewirken. Auf diese Weise kann ein höherer Schallfluss erzeugt werden, als wenn die Kontraktion/Dilatation des Elektro-Akustik-Wandlers selbst den Hub der Membran begrenzt.

Der Elektro-Akustik-Wandler kann eine Piezokeramik und/oder einen Elektretwandler und/oder einen Piezoelektretwandler umfassen. Insbesondere kann der Elektro-Akustik-Wandler im Wesentlichen aus einem der vorgenannten Bauteile bestehen (selbstverständlich exklusive etwaiger elektrischer Anschlüsse). Auf diese Weise kann eine besonders geringe Abmessung der Wandleranordnung erzielt werden.

Bevorzugt kann die Kavität in eine Oberfläche des Fortbewegungsmittels eingeformt sein. Beispielsweise bieten sich Kunststoffstrukturen nach Art eines Stoßfängers hierfür besonders an. Hierbei kann die Kavität als Positivform im Zuge eines Spritzgussverfahrens vorgesehen werden. Alternativ oder zusätzlich kann die Kavität durch einen Stanzvorgang in die (spätere) Oberfläche des Fortbewegungsmittels eingeformt werden. Hierbei können auch Positionierhilfen für eine exakte Positionierung der Membran und/oder des Elektro-Akustik-Wandlers vorgesehen werden.

Bevorzugt kann die Kavität einen Dämmstoff enthalten, welcher eingerichtet ist, durch Fluidreibung und/oder Kontakt mit der Membran und/oder dem Elektro-Akustik-Wandler Schwingungsenergie zu dissipieren. Beispielsweise kann der Dämmstoff einen offenporigen Schaumstoff aufweisen. Alternativ oder zusätzlich kann ein Flies- und/oder Gewebematerial vorgesehen sein, um innerhalb der Kavität befindliches Fluid bzw. dessen Strömung zu behindern. Auf diese Weise kann ein unnötig langes Ausschwingen der Membran bzw. des Elektro-Akustik-Wandlers vermieden werden und die Totzeit zwischen zwei Messzyklen kann verringert werden.

Die Membran und der Bodenbereich der Kavität können im Wesentlichen parallel zueinander verlaufen. Dies verringert bei festgehaltenem Volumen der Kavität die erforderliche Bauhöhe der Wandleranordnung.

Die Membran und der Bodenbereich der Kavität können einen Abstand von kleiner 10 mm, insbesondere in einem Bereich von 2 mm bis 6 mm zueinander aufweisen.

Der Bodenbereich der Kavität weist erfindungsgemäß bezüglich der Membran unterschiedliche Abstände auf. Mit anderen Worten weist der Bodenbereich unterschiedliche Sektionen auf, welche in Richtung der Membran unterschiedlich stark hervorstehend ausgestaltet sind. Auf diese Weise wird der Frequenzgang des Elektro-Akustik-Wandlers ebenso wie seine Richtcharakteristik erfindungsgemäß gezielt beeinflusst. Die Kavität zwischen der Membran und dem Chassis kann in einer Richtung senkrecht zur Schallausbreitungsrichtung eine Erstreckung aufweisen, welche mindestens doppelt zu groß wie eine entsprechende in Richtung der Hauptschallabstrahlung orientierte Erstreckung ist. Auf diese Weise kann die Bauhöhe in Schallabstrahlrichtung weiter verringert werden, während die Querstreckung einen technisch erforderlichen Schallfluss ermöglicht.

Die Kavität kann beispielsweise eine Breite (im Falle einer kreisrunden Wandleranordnung auch "Durchmesser") zwischen 4 mm und 20 mm, insbesondere zwischen 6 mm und 16 mm aufweisen. Die Breite ist also als Erstreckung in einer Richtung quer zur Richtung der Hauptrichtung der Schallabstrahlung zu verstehen. Die vorgenannten Abmessungen lassen sich dennoch unproblematisch in die Strukturen heutzutage üblicher Stoßfänger integrieren.

Der Elektro-Akustik-Wandler kann beispielsweise in einem Randbereich auf dem Chassis aufliegen und insbesondere in das Chassis eingespannt sein. Mit anderen Worten umläuft eine Struktur des Chassis den Randbereich des Elektro-Akustik-Wandlers, so dass bereits ohne das Anliegen eines elektrischen Signals am Elektro-Akustik-Wandler derselbe durch das Chassis in einer Richtung quer zur Richtung der Hauptschallabstrahlung komprimiert wird. Auf diese Weise kann ein den Elektro-Akustik-Wandler verbreiterndes elektrisches Signal rascher und stärker eine Wölbung des Elektro-Akustik-Wandlers bzw. der mit ihm gekoppelten Membran bewirken und höhere Schalldrücke erzeugen bzw. eine höhere Empfindlichkeit im Falle eintreffender Schallsignale bewirken.

Im Randbereich kann der Elektro-Akustik-Wandler bevorzugt in das Chassis eingeklebt sein. Hierzu kann das Chassis im Randbereich einen Sims aufweisen, auf welchem ein Randbereich des Elektro-Akustik-Wandlers aufliegt und verklebt ist. Dies ermöglicht eine fertigungstechnisch günstige und robuste Positionierung des Elektro-Akustik-Wandlers und gleichzeitig eine volumenoptimierte Anordnung.

Um die Möglichkeit der Membran zum Ausführen von Schwingungen im Ansprechen auf Bewegungen des Elektro-Akustik-Wandlers zu begünstigen, kann ein (zentraler) schwingfähiger Bereich der Membran durch mindestens eine Verjüngung gegenüber einem vernachlässigbar schwingfähigen Bereich im Randbereich der Membran abgegrenzt sein. Solche Bereiche erhöhter Elastizität werden im Lautsprecherbau auch als "Sicke" bezeichnet und können beispielsweise als Positivform im Zuge eines Spritzgussverfahrens zur Herstellung der Membran vorgesehen werden und/oder durch ein anschließendes materialabtragendes Verfahren vorgesehen werden.

Gemäß einem zweiten Aspekt der vorliegenden Erfindung wird ein Fortbewegungsmittel (z.B. ein PKW, ein Transporter, ein LKW, ein Motorrad, o.ä.) vorgeschlagen, welches ein System zur Umfelderkennung aufweist. Das System zur Umfelderkennung kann eine Wandleranordnung aufweisen, wie sie in Verbindung mit dem erstgenannten Erfindungsaspekt im Detail beschrieben worden ist. Die Wandleranordnung kann zum Aussenden und/oder Empfangen akustischer Signale zur Detektion von Umgebungsobjekten eingerichtet sein. Insbesondere kann das Chassis der Wandleranordnung Bestandteil eines Stoßfängers des Fortbewegungsmittels sein. Auch andere Bereiche der Außenhaut des Fortbewegungsmittels können durch die erfindungsgemäße Wandleranordnung zur Ausführung der Umfelderkennung eingerichtet sein.

Selbstverständlich können erfindungsgemäß ausgestaltete Wandleranordnungen nach Art eines Arrays angeordnet und miteinander betrieben werden, so dass eine Richtwirkung für ausgesandten Schall erzielt oder eine richtungsselektive Analyse aus der Umgebung empfangener Signale möglich sind.

Die elektrische Kontaktierung des Elektro-Akustik-Wandlers kann zumindest stellenweise durch ein Material erfolgen, welches in der Display-Technik als "Leitgummi" bezeichnet wird, durch welches starre elektrische Einheiten, wie die Leiterzüge (Glas) Displays mit einer Leiterplatte verbunden werden können.

Das Chassis kann Leitungsführungen und/oder Bauelemente zur elektrischen Ansteuerung bzw. Auswertung der Signale des Elektro-Akustik-Wandlers enthalten. Beispielsweise kann eine Leiterplatte, insbesondere eine etwas dickere, akustisch relativ starre Platine vorgesehen sein, welche sich gut als Schallreflektor eignet.

### Kurze Beschreibung der Zeichnungen

Nachfolgend werden Ausführungsbeispiele der Erfindung unter Bezugnahme auf die begleitenden Zeichnungen im Detail beschrieben. In den Zeichnungen ist:
- Figur 1: eine schematische Übersicht über Komponenten eines Ausführungsbeispiels eines erfindungsgemäß ausgestalteten Fortbewegungsmittels mit einem Ausführungsbeispiel einer erfindungsgemäßen Wandleranordnung;
- Figur 2: eine Schnittdarstellung durch ein erstes Ausführungsbeispiel einer erfindungsgemäße Wandleranordnung;
- Figur 3: eine Schnittdarstellung durch ein zweites Ausführungsbeispiel einer erfindungsgemäße Wandleranordnung;
- Figur 4: eine Schnittdarstellung durch ein drittes Ausführungsbeispiel einer erfindungsgemäße Wandleranordnung; und
- Figur 5: eine Schnittdarstellung durch ein viertes Ausführungsbeispiel einer erfindungsgemäße Wandleranordnung.

### Ausführungsformen der Erfindung

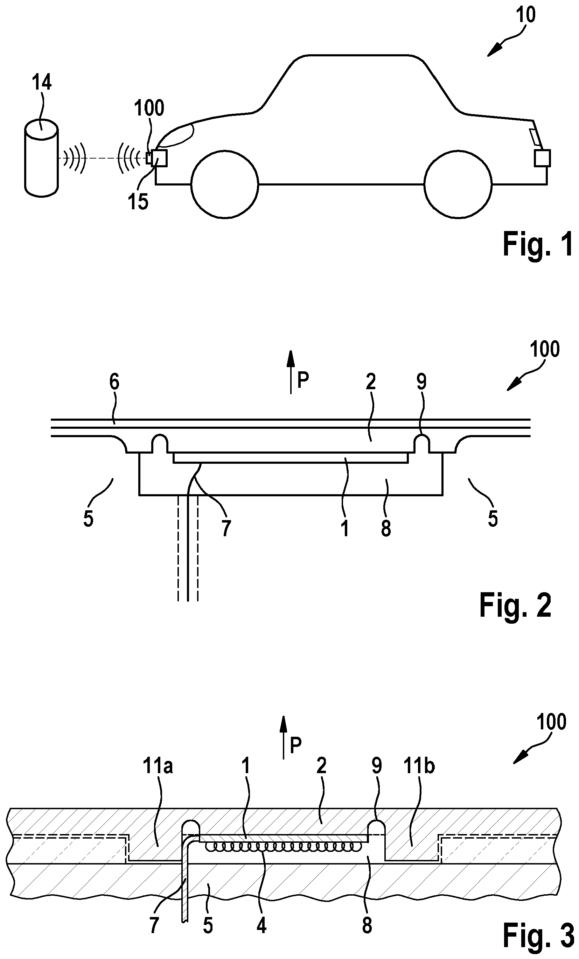

Figur 1 zeigt einen PKW 10 als Fortbewegungsmittel, in dessen vorderem Stoßfänger 15 eine elektro-akustische Wandleranordnung 100 zur Erkennung eines Umgebungsobjektes 14 eingelassen ist. Die von der Wandleranordnung 100 ausgesandten Ultraschallsignale werden vom Umgebungsobjekt 14 reflektiert und hinsichtlich Laufzeit und Amplitude ausgewertet, um auf einen Abstand des Umgebungsobjektes 14 vom PKW 10 schließen zu können.

Figur 2 zeigt eine Schnittdarstellung durch ein erstes Ausführungsbeispiel einer erfindungsgemäßen Wandleranordnung 100, in welcher ein Elektro-Akustik-Wandler 1 ("Motor") flächig auf eine Membran 2 geklebt ist. Der zentrale Bereich der Membran 2, welcher den Elektro-Akustik-Wandler 1 aufweist, wird nach außen hin durch eine Sicke 9 in Form einer umlaufenden Verjüngung begrenzt.

Der außerhalb der Sicke 9 befindliche und mit dem Chassis 5 verklebte Bereich der Membran 2 ist im Wesentlichen nicht schwingfähig. Im Gegensatz hierzu ist der zentrale Bereich der Membran 2 schwingfähig ausgeführt. Der Elektro-Akustik-Wandler 1 ist innerhalb einer Kavität 8 des Chassis 5 angeordnet, welche eine schallharte Kapselung der Rückseite der Membran 2 darstellt. Beim Empfang akustischer Umgebungssignale können elektrische Signale über eine elektrische Anschlussleitung 7 vom Elektro-Akustik-Wandler 1 abgegriffen werden bzw. diesem zur Ausstrahlung von Schallereignissen zugeführt werden. In der Hauptrichtung P der Schallabstrahlung wird die Membran 2 von einer Lackschicht 6 überlagert, welchen die Membran 2 nicht nennenswert schwingungstechnisch behindert. Die Membran 2 liegt auf einem die Kavität 8 umlaufenden Sims des Chassis 5 auf, so dass sich eine einfache und dauerhaft zuverlässige Positionierung der Membran 2 bzw. des Elektro-Akustik-Wandlers 1 ergibt.

Figur 3 zeigt ein alternatives Ausführungsbeispiel einer Wandleranordnung 100, bei welcher sich die relative Positionierung zwischen einem Boden der Kavität 8 innerhalb des Chassis 5 und dem Elektro-Akustik-Wandler 1 über Stempelstrukturen 11a, 11b ergibt, welche im außerhalb der Sicke 9 angeordneten Bereich der Membran 2 ausgebildet sind und auf dem Boden der Kavität 8 aufliegen. Rückseitig ist der Elektro-Akustik-Wandler 1 mit einem Dämmstoff 4 in Form eines offenporigen Schaumstoffs versehen, welcher für eine rasche Dissipation von Schallenergie in der Kavität 8 sorgt. Die Stempelstrukturen 11a, 11b können in die Kavität 8 eingepresst werden, sodass sich eine im Wesentlichen senkrecht zur Hauptrichtung der Schallabstrahlung P orientierte Vorspannung der Membran 2 ergibt. Der unterhalb des Elektro-Akustik-Wandlers 1 angeordnete Dämmstoff 4 kann optional zum Abdichten bzw. zum Verguss des Elektro-Akustik-Wandlers 1 gegenüber äußeren Einflüssen (Fluid und Partikel) verwendet werden. Zusammen mit einer optional durch die Stempelstrukturen 11a, 11b für die Anschlussleitung 7 des Elektro-Akustik-Wandlers 1 dargestellten Zugentlastung entsteht so eine aufwandsarme und damit kostengünstige Konstruktion, die leicht montierbar ist.

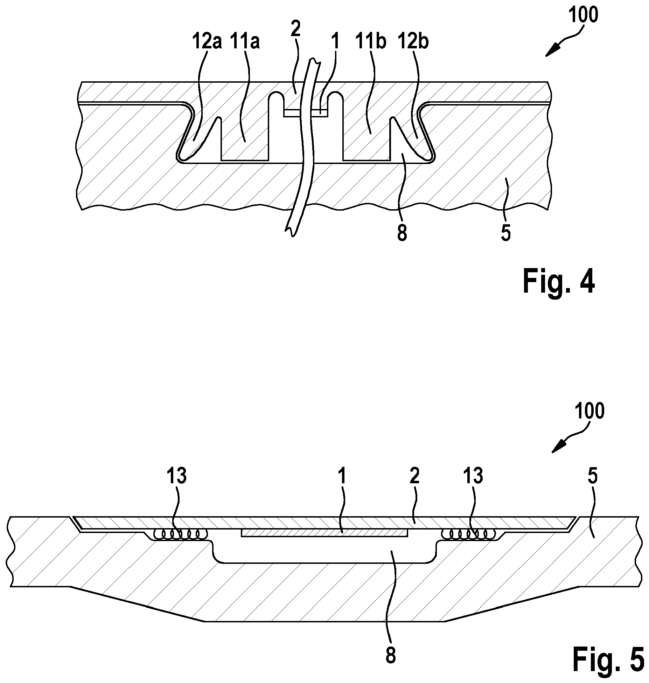

Figur 4 zeigt eine alternative Ausführungsform, bei welcher außerhalb der in Figur 3 gezeigten Stempelstrukturen 11a, 11b Rastnasen 12a, 12b vorgesehen sind, welche in Eingriff mit einer konkaven Flankengestalt der Kavität 8 des Chassis 5 korrespondieren. Auf diese Weise kann die Membran 2 in die Kavität 8 eingeklipst werden, wodurch sie auch ohne eine Verklebung oder während eines Aushärtevorgangs einer Verklebung an vordefinierter Stelle gehalten wird.

Figur 5 zeigt eine terrassenförmige Kavität 8 innerhalb des Chassis 5, wobei die Membran 2 in einem äußersten Terrassenbereich der Kavität 8 gelagert ist. In einem sich daran anschließenden, dem Zentrum der Kavität 8 zugewandten zweiten Terrassenbereich ist ein Klebstoff 13 aufgetragen, welcher für eine umlaufende Abdichtung zwischen dem Chassis 5 und der Membran 2 sorgt und die Membran 2 an Ort und Stelle hält. Ein zentraler Bereich der Kavität 8 weist einen im Wesentlichen parallel zur Oberfläche der Membran 2 bzw. des Elektro-Akustik-Wandlers 1 orientierte Oberfläche mit maximalem Abstand auf, oberhalb welcher der Elektro-Akustik-Wandler 1 vollflächig mit der Membran 2 verbunden (verklebt) ist. In diesem Bereich weist der Boden der Kavität 8 einen Abstand von 4 mm zur Unterseite der Membran 2 auf. Der rücklaufende Schall kann am Chassis 5 reflektiert werden und wenn der Abstand ein Vielfaches von 3/2 Lambda ist, überlagert sich der rücklaufende Schall konstruktiv mit der Membranbewegung. Bei über der Membranfläche verteilt unterschiedlichen Abständen zu reflektierenden Bereichen des Chassis 5 kann der Frequenzgang ebenso wie die Richtcharakteristik gezielt beeinflusst werden. Die Membran 2 kann in einer bevorzugten Ausführung mittels eines Klebstoffs 13 mit schalldämmenden Eigenschaften zur Verminderung der Schallleitung in das Chassis 5 eingeklebt werden.

Bevorzugt wird die dargestellte Anordnung wie folgt in zwei Fertigungsschritten gefertigt: Im ersten Fertigungsschritt werden die dargestellten terrassenartigen Bereiche der Kavität 8 erzeugt. Bei einem Chassis 5 aus Kunststoff kann dies beispielsweise durch Stempel-Pressen mittels eines konturierten Stempels erfolgen. Optional kann auch die Membraneinpassungskavität (der Terrassenbereich, auf welchem die Membran 2 ruht) zumindest ansatzweise gestempelt werden. In einem zweiten Fertigungsschritt wird der Klebstoff 13 aufgetragen. Beim anschließenden Zusammenbringen von Membran 2 und Chassis 5 könnte ein Walzen oder großflächiges Andrücken zur Anwendung kommen. Durch die Auflage im Bereich der Membraneinpassung kann in einer bevorzugten Ausprägung das Höhenniveau der Membran 2 an das Höhenniveau des Chassis 5 angepasst werden, so dass die Oberfläche der Membran 2 und die Oberfläche des Chassis 5 eine Ebene ergeben, die mit bekannten Mitteln optional verspachtelt, geschliffen und/oder beschichtet (mit Folie und/oder einem Lack) werden kann. Bei entsprechender Beherrschung des Klebe- und Dichtprozesses kann auf die Membraneinpassungsfläche auch verzichtet werden, so dass der Sensoraufbau seitlich mit der Klebe- und Dicht-Kavität endet.

## Patentansprüche

1. Wandleranordnung zum Aussenden und/oder Empfangen von akustischen Signalen an einem Fortbewegungsmittel (10) umfassend
- ein Chassis (5),
- eine Membran (2), und
- einen Elektro-Akustik-Wandler (1),
wobei
- das Chassis (5) eine Kavität (8) aufweist,
- die Membran (2) die Kavität (8) in Schallabstrahlrichtung abschließt und
- der Elektro-Akustik-Wandler (1) mit der Membran (2) verbunden ist, wobei das Chassis (5) akustisch dicht ausgeführt ist,
**dadurch gekennzeichnet, dass** der Bodenbereich der Kavität (8) bezüglich der Membran (2) unterschiedliche Abstände aufweist und auf diese Weise der Frequenzgang des Elektro-Akustik-Wandlers (1), und/oder seine Richtcharakteristik beeinflusst wird bzw. werden.

2. Wandleranordnung nach Anspruch 1, wobei der Elektro-Akustik-Wandler (1) flächig mit der Membran (2) verbunden ist, und eingerichtet ist, im Ansprechen auf angelegte elektrische Signale eine Biegung der Membran (2) herbeizuführen.

3. Wandleranordnung nach Anspruch 1 oder 2, wobei
- der Elektro-Akustik-Wandler (1)
- eine Piezokeramik und/oder
- einen Elektretwandler und/oder
- einen Piezoelektretwandler umfasst.

4. Wandleranordnung nach einem der vorstehenden Ansprüche, wobei
- die Kavität (8) in eine Oberfläche des Fortbewegungsmittels (10) insbesondere in die Karosserieoberfläche, bevorzugt in die Stoßfängerstruktur (15) eingeformt ist.

5. Wandleranordnung nach einem der vorstehenden Ansprüche, wobei
- die Kavität (8) einen Dämmstoff (4) enthält, welcher eingerichtet ist, durch Fluidreibung und/oder Kontakt mit
- der Membran (2), und/oder
- dem Elektro-Akustik-Wandler (1) Schwingungsenergie zu dissipieren.

6. Wandleranordnung nach einem der vorstehenden Ansprüche, wobei
- die Membran (2) und ein Bodenbereich der Kavität (8) einen Abstand von kleiner 10 mm, insbesondere im Bereich 2mm bis 6mm, zueinander aufweisen.

7. Wandleranordnung nach einem der vorstehenden Ansprüche, wobei ein überwiegender Bodenbereich der Kavität (8) im Wesentlichen eben bezüglich der Membran (2) und/oder des Elektro-Akustik-Wandler (1) ist.

8. Wandleranordnung nach einem der vorstehenden Ansprüche, wobei das Chassis (5) eine Öffnung zur Erzielung eines statischen Druckausgleiches zwischen der Kavität (8) und einer Umgebung der Wandleranordnung (100) aufweist.

9. Wandleranordnung nach einem der vorstehenden Ansprüche, wobei die Kavität (8) zwischen der Membran (2) und dem Chassis (5) mindestens doppelt so breit wie in Richtung (P) der Schallabstrahlung ist.

10. Wandleranordnung nach einem der vorstehenden Ansprüche, wobei die Kavität (8) eine Breite, insbesondere einen Durchmesser, zwischen 4mm und 20mm, insbesondere zwischen 6mm und 16mm aufweist.

11. Wandleranordnung nach einem der vorstehenden Ansprüche, wobei der Elektro-Akustik-Wandler (1) an einem Randbereich auf dem Chassis (5) aufliegt und insbesondere in das Chassis (5) eingespannt ist.

12. Wandleranordnung nach einem der vorstehenden Ansprüche, wobei weiter
- ein schwingfähiger Bereich der Membran (2) an einem Randbereich durch mindestens eine Verjüngung (9) gegenüber einem vernachlässigbar schwingfähigen Bereich begrenzt ist.

13. Fortbewegungsmittel umfassend ein System zur Umfelderkennung mit einer Wandleranordnung (100) nach einem der vorstehenden Ansprüche.

## Claims

1. Transducer arrangement for sending and/or receiving acoustic signals on a means of locomotion (10), comprising
- a chassis (5),
- a membrane (2), and
- an electro-acoustic transducer (1),
- the chassis (5) having a cavity (8),
- the membrane (2) sealing off the cavity (8) in
the sound emission direction, and
- the electro-acoustic transducer (1) being connected to the membrane (2), the chassis (5) being sealed acoustically,
**characterized in that** the bottom region of the cavity (8) has different spacings with respect to the membrane (2) and, in this way, the frequency response of the electro-acoustic transducer (1) and/or its directional characteristic is or are influenced.

2. Transducer arrangement according to Claim 1, wherein the electro-acoustic transducer (1) is connected to the membrane (2) in a planar manner and is configured to cause bending of the membrane in response to applied electric signals.

3. Transducer arrangement according to Claim 1 or 2, wherein
- the electro-acoustic transducer (1)
- comprises a piezoceramic and/or
- an electret transducer and/or
- a piezoelectric transducer.

4. Transducer arrangement according to one of the preceding claims, wherein
- the cavity (8) is moulded into a surface of the means of locomotion (10) in particular into the body surface, preferably into the bumper structure (15).

5. Transducer arrangement according to one of the preceding claims, wherein
- the cavity (8) contains an insulating material (4), which is configured to dissipate vibration energy by fluid friction and/or contact with
- the membrane (2), and/or
- with the electro-acoustic transducer (1).

6. Transducer arrangement according to one of the preceding claims, wherein
- the membrane (2) and a bottom region of the cavity (8) have a spacing from each other of less than 10 mm, in particular in the range from 2 mm to 6 mm.

7. Transducer arrangement according to one of the preceding claims, wherein a predominant bottom region of the cavity (8) is substantially flat with respect to the membrane (2) and/or the electro-acoustic converter (1).

8. Transducer arrangement according to one of the preceding claims, wherein the chassis (5) has an opening for achieving static pressure equalization between the cavity (8) and an environment of the transducer arrangement (100).

9. Transducer arrangement according to one of the preceding claims, wherein the cavity (8) between the membrane (2) and the chassis (5) is at least twice as wide as in the direction (P) of the sound emission.

10. Transducer arrangement according to one of the preceding claims, wherein the cavity (8) has a width, in particular a diameter, between 4 mm and 20 mm, in particular between 6 mm and 16 mm.

11. Transducer arrangement according to one of the preceding claims, wherein the electro-acoustic transducer (1) rests on an edge region on the chassis (5) and in particular is clamped into the chassis (5).

12. Transducer arrangement according to one of the preceding claims, wherein in addition
- a region of the membrane (2) that is capable of vibrating is delimited by an edge region by at least one narrowing (9) with respect to a region that is negligibly capable of vibrating.

13. Means of locomotion comprising a system for environment detection with a transducer arrangement (100) according to one of the preceding claims.

## Revendications

1. Arrangement transducteur destiné à émettre et/ou à recevoir des signaux acoustiques au niveau d'un moyen de déplacement (10), comprenant
- un châssis (5),
- une membrane (2) et
- un transducteur électroacoustique (1),
- le châssis (5) possédant une cavité (8),
- la membrane (2) fermant la cavité (8) dans la direction du rayonnement acoustique et
- le transducteur électroacoustique (1) étant relié à la membrane (2), le châssis (5) étant réalisé hermétiquement du point de vue acoustique,
**caractérisé en ce que** la zone de fond de la cavité (8) possède des écarts différents en référence à la membrane (2) et la réponse en fréquence du transducteur électroacoustique (1) et/ou sa caractéristique directionnelle est ou sont ainsi influencée(s).

2. Arrangement transducteur selon la revendication 1, le transducteur électroacoustique (1) étant relié à plat avec la membrane (2) et étant conçu pour provoquer une flexion de la membrane (2) en réaction à des signaux électriques appliqués.

3. Arrangement transducteur selon la revendication 1 ou 2,
le transducteur électroacoustique (1) comportant
- une piézocéramique et/ou
- un transducteur électret et/ou
- un transducteur piézoélectret.

4. Arrangement transducteur selon l'une des revendications précédentes,
- la cavité (8) étant façonnée dans une surface du moyen de déplacement (10), notamment dans la surface de la carrosserie, de préférence dans la structure de pare-chocs (15).

5. Arrangement transducteur selon l'une des revendications précédentes,
- la cavité (8) contenant un matériau isolant (4) qui est conçu pour dissiper l'énergie vibratoire par frottement fluidique et/ou contact avec
- la membrane (2) et/ou
- le transducteur électroacoustique (1).

6. Arrangement transducteur selon l'une des revendications précédentes,
- la membrane (2) et une zone de fond de la cavité (8) possédant l'une par rapport à l'autre un écart inférieur à 10 mm, notamment dans la plage de 2 mm à 6 mm.

7. Arrangement transducteur selon l'une des revendications précédentes, une zone de fond prédominante de la cavité (8) étant sensiblement plane en référence à la membrane (2) et/ou au transducteur électroacoustique (1).

8. Arrangement transducteur selon l'une des revendications précédentes, le châssis (5) possédant une ouverture destinée à obtenir un équilibre de pression statique entre la cavité (8) et un environnement de l'arrangement transducteur (100).

9. Arrangement transducteur selon l'une des revendications précédentes, la cavité (8) étant au moins deux fois plus large entre la membrane (2) et le châssis (5) que dans la direction (P) du rayonnement acoustique.

10. Arrangement transducteur selon l'une des revendications précédentes, la cavité (8) possédant une largeur, notamment un diamètre, entre 4 mm et 20 mm, notamment entre 6 mm et 16 mm.

11. Arrangement transducteur selon l'une des revendications précédentes, le transducteur électroacoustique (1) reposant au niveau d'une zone de bord sur le châssis (5) et étant notamment encastré dans le châssis (5).

12. Arrangement transducteur selon l'une des revendications précédentes, avec lequel de plus
- une zone apte à vibrer de la membrane (2) est délimitée au niveau d'une zone de bord par au moins un rétrécissement (9) par rapport à une zone dont l'aptitude à vibrer est négligeable.

13. Moyen de déplacement comprenant un système de reconnaissance de l'environnement pourvu d'un arrangement transducteur (100) selon l'une des revendications précédentes.
